# EUROPÄISCHE PATENTSCHRIFT

(11) **EP 1 286 753 B1**
(45) Veröffentlichungstag und Bekanntmachung des Hinweises auf die Patenterteilung: **08.09.2004**
(21) Anmeldenummer: 01940500.0
(22) Anmeldetag: 18.05.2001
(51) Int. Cl.: B01D 53/32, B01D 53/94, F01N 3/08, B01J 19/08

(54) **KOMPAKTER PLASMAREAKTOR**
COMPACT PLASMA REACTOR
REACTEUR A PLASMA COMPACT

(30) Priorität: 02.06.2000 DE 10027409
(43) Veröffentlichungstag der Anmeldung: 05.03.2003
(73) Patentinhaber: Emitec Gesellschaft für Emissionstechnologie mbH, 53797 Lohmar (DE)
(72) Erfinder: BRÜCK, Rolf, 51429 Bergisch Gladbach (DE); KONIECZNY, Jörg-Roman, 53721 Siegburg (DE)
(74) Vertreter: Kahlhöfer, Hermann, Dipl.-Phys.
(86) Internationale Anmeldenummer: PCT/EP2001/005690
(87) Internationale Veröffentlichungsnummer: WO 2001/091889

(56) Entgegenhaltungen:
- EP-A- 0 821 995
- EP-A- 0 958 859
- WO-A-98/02233
- US-A- 5 603 893
- US-A- 5 807 526

## Beschreibung

Die Erfindung bezieht sich auf eine Vorrichtung zum Reinigen eines Abgases gemäß dem Oberbegriff des Anspruchs 1 sowie einem Verfahren zu dessen Betrieb gemäß dem Oberbegriff des Anspruchs 17. Derartige Vorrichtungen und Verfahren werden insbesondere zur Reinigung von Abgasen eingesetzt, wie sie bei dem Betrieb von Kraftfahrzeugen entstehen.

In nahezu allen Ländern mit hoher Motorisierungsrate sind die Schadstoffe im Abgas von Kraftfahrzeugen durch Grenzwerte limitiert. Dabei werden insbesondere die emittierten Kohlenmonoxide sowie teilweise und unverbrannte Kohlenwasserstoffe begrenzt. Außerdem enthält das Abgas die Oxidationsprodukte des Stickstoffs NO und NO₂ (zusammengefaßt NOₓ) und aus Brennstoffverunreinigungen bzw. -additiven entstehende Schadstoffe, wie Bleioder Schwefelverbindungen.

Während für die Umsetzung von Kohlenmonoxid und Kohlenwasserstoffen bereits effektive Vorrichtungen und Verfahren bekannt sind, bereitet die Umsetzung des NOₓ gerade in der Kaltstartphase eines Motors Probleme. Eine Ursache ist darin zu sehen, daß heutige Motoren überwiegend im mageren Bereich gefahren werden, also mit einer hohen Sauerstoff-Konzentration, wodurch die Stickoxidbildung in Verbindung mit den auftretenden hohen Temperaturen im Motor bzw. dem Abgassystem gefördert wird.

Mit dem Einsatz von bekannten Katalysatoren ist die Reduktion des NOₓ möglich (Reduktionskatalysator). Dazu müssen allerdings reduzierende Komponenten, wie z. B. molekularer Wasserstoff oder Kohlenmonoxid, im Abgas vorhanden sein, während sich nennenswerte Sauerstoff-Konzentrationen verbieten. Die Affinität von molekularem Wasserstoff und Kohlenmonoxid ist größer zu Sauerstoff, so daß eine Reduktion der Stickoxide in Anwesenheit von hohen Sauerstoff-Konzentrationen nicht möglich ist Demzufolge wäre der Betrieb der Motoren mit fettem Gemisch erforderlich, was jedoch aufgrund der gesetzlichen Auflagen über einen längeren Zeitraum nicht möglich ist.

Bekannte Verfahren und Vorrichtungen zur Abgasentstickung beruhen überwiegend auf der Umsetzung der Stickoxide mit Ammoniak zu molekularem Stickstoff und Wasserdampf Ohne Katalysator werden diese Reaktionen mit Ammoniak-Überschuß und bei Temperaturen um 900 °C durchgeführt (SNCR-Verfahren). Mit einem Katalysator ist es möglich, bei niedrigerem Ammoniak-Überschuß die Reaktionstemperatur auf 180 bis 450 °C abzusenken (SCR-Verfahren).

Bei einem SCR-System wird Ammoniak zerstäubt und damit eine katalytisch aktive Struktur im Abgassystem benetzt. Auf der katalytisch aktiven Oberfläche der Struktur reagiert - NOₓ in Anwesenheit des Ammoniaks zu molekularem Stickstoff und Wasser. Diese Reaktionen finden bevorzugt in sauerstoffreicher Umgebung statt. Die Reduktion der Stickoxide hängt weiterhin in starkem Maße von der Temperatur ab. Eine effektive Reduktion erfolgt lediglich in einem Temperaturfeld von ± 28 °C, bei einem bestimmten Sauerstoffgehalt im Abgas. Unterhalb dieses Temperaturfeldes sinkt die katalytische Aktivität der Struktur, und der zugeführte Ammoniak gelangt in die Umgebung. Wird das Temperaturfeld überschritten, findet bevorzugt eine Umwandlung des Ammoniaks in zusätzliches Stickoxid statt.

Bekannte katalytische Konverter können nicht auf die erforderliche Aktivität in Anwesenheit eines deutlichen Sauerstoffüberschusses sowie eine ausreichende Lebensdauer aufgrund der Anwesenheit von Wasser verweisen, um eine geeignete NOₓ-Reduzierung zu gewährleisten. Der Betrieb bekannter katalytischer Konverter in einem sehr engen Temperaturfenster bereitet weiterhin zusätzliche Probleme.

Weiterhin sind Verfahren zur NOₓ-Reduktion in sauerstoffreichem Abgas von Automobilen bekannt, die eine Abgasbehandlung mittels Plasma und einer selektiven katalytischen Reduktion kombinieren. Das Abgas besteht aus einer Vielzahl von Atomen und Molekülen, welche bei ausreichender Energiezufuhr in den Plasmazustand übergehen. Dabei brechen die Hüllen dieser Bestandteile durch Stoßprozesse und es entstehen positiv geladene Ionen, Elektronen und reaktionsfreudige Radikale. Das induzierte Plasma oxidiert Stickstoffmonoxid zu Stickstoffdioxid und bricht die komplexen, teilweise verbrannten oder unverbrannten Kohlenwasserstoffe in kleinere Moleküle. Diese kleineren Kohlenwasserstoffe erhöhen signifikant die Aktivität des Katalysators und unterstützen die Oxidation der Stickstoffmonoxide.

In Verbindung mit einem Katalysator unterstützen die Kohlenwasserstoffe die Reduzierung des Stickstoffdioxids zu molekularem Stickstoff. Diese plasmaunterstützte katalytische Reaktion kann schematisch in zwei Schritte unterteilt werden:
1. Plasma + NO + O₂ + HC -> NO₂ + HC und
2. Katalysator + NO₂ + HC -> N₂ + CO₂ + H₂O,
wobei HC für eine Vielzahl von Kohlenwasserstoffmolekülen steht.

Derartige Plasmen werden im Automobilbau bevorzugt mittels eines elektrischen Feldes erzeugt, das mit einer Hochspannung generiert wird. Insbesondere die Generierung eines Plasmas mit einer Corona-Entladung oder einer dielektrisch behinderten Entladung werden bevorzugt. Ist eine Corona-Entladung gewünscht, ist eine ungleichmäßige Ausrichtung des elektrischen Feldes möglich. So sind beispielsweise Vorrichtungen mit einem Draht bekannt, der von einem sehr starken elektrischen Feld umgeben ist, das jedoch radial auswärts deutlich abfällt und das ihn umgebende Gehäuse nicht erreicht, wodurch die Ausbildung eines Lichtbogens unterbunden wird. Alternativ dazu kann die Ausbildung von Lichtbögen durch gepulste Spannungsanlegung vermieden werden. Bei einer dielektrisch behinderten Entladung ist mindestens eine Elektrode mit einem Dielektrikum beschichtet. Die entstehenden Lichtbögen erlöschen unter Oberfläche des dielektrischen Materials.

Bekannte Plasmareaktoren, wie beispielsweise aus der WO 95/31271, sind sehr komplex und großvolumig ausgeführt. Für eine effektive Umwandlung der Stickstoffmonoxide muß das Plasma über eine bestimmte Reaktionsstrecke ausgebildet sein. Diese Reaktionsstrecke ist umso länger, je geringer die angelegte Spannung ist und/oder je weiter die Elektroden voneinander beabstandet sind.

Die EP-A-0.958.859 beschreibt eine Vorrichtung zur plasmachemischen Reinigung des Abgases einer Verbrennungsmaschine mit einer für ein Abgas durchströmbaren ersten und zweiten Elektrode. Die erste Elektrode ist von der zweiten Elektrode elektrisch isoliert angeordnet und in dem Zwischenraum wird ein Plasma erzeugt.

Aufgabe der vorliegenden Erfindung ist es, eine Vorrichtung zum Reinigen eines Abgases anzugeben, die eine verbesserte Reduktion des NOₓ im Abgas bewirkt und eine kompakte Bauform aufweist. Weiterhin soll ein Verfahren zu dessen Betrieb angegeben werden.

Diese Aufgaben werden erfindungsgemäß durch eine Vorrichtung mit den Merkmalen des Anspruchs 1 sowie einem Verfahren mit den Merkmalen des Anspruchs 17 gelöst. Vorteilhafte Weiterbildungen und Ausgestaltungen sind Gegenstand der abhängigen Ansprüche.

Die erfindungsgemäße Vorrichtung zum Reinigen eines Abgases einer Verbrennungsmaschine ist mindestens mit einer ersten und einer zweiten Komponente ausgeführt. Jede Komponente weist einen Mantel und einen für ein Abgas durchströmbaren Kern mit zwei Stirnflächen auf. Mindestens eine Stirnfläche der ersten Komponente und mindestens eine Stirnfläche der zweiten Komponente weisen ein vorgebbares Profil aus Erhebungen und Senken auf Die Komponenten sind so angeordnet, daß sich die Erhebungen der Stirnseite der ersten Komponente in die Senken der Stirnseite der zweiten Komponente erstrecken und umgekehrt, wodurch ein Durchdringungsabschnitt gebildet wird.

Die erfindungsgemäße Vorrichtung zeichnet sich dadurch aus, daß die erste Komponente von der zweiten Komponente elektrisch isoliert angeordnet ist, die Komponenten untereinander eine Potentialdifferenz aufweisen und in dem Durchdringungsabschnitt ein Plasma erzeugbar ist. Durch Anlegen einer Potentialdifferenz zwischen den Komponenten, wird eine komplizierte Stromführung für den Aufbau eines Plasmareaktors vermieden. In dem Durchdringungsabschnitt liegen benachbarte Erhebungen sehr dicht beieinander, wobei aufgrund der angelegten Spannung an den Komponenten ein Plasma zwischen diesen Erhebungen erzeugbar ist. Bei der Anordnung einer solchen Vorrichtung in einer Abgasanlage werden die erste und die zweite Komponente von dem Abgas durchströmt, wobei die Reaktionsfreudigkeit der im Abgas befindlichen Schadstoffe durch das Plasma verbessert wird.

Die Komponenten weisen mindestens einen Anschluß zum Anlegen einer elektrischen Spannung auf. Diese Anschlüsse sind so gestaltet, daß sie für die Erzeugung des erforderlichen elektrischen Feldes geeignet sind. Dabei stehen insbesondere die Gewährleistung einer Hochspannung mit hoher Wiederholrate im Vordergrund. Zusätzlich genügen diese Anschlüsse den dynamischen Anforderungen in einem Abgassystem.

Der Kern der ersten und/oder der zweiten Komponente weist zumindest teilweise eine Wabenstruktur auf. Die Wabenstruktur stellt eine große Oberfläche zur Verfügung, welche gegebenenfalls für die Umsetzung von Schadstoffe genutzt werden kann, wobei diese Struktur dennoch eine hohe Festigkeit des Kerns gewährleistet.

Besonders vorteilhaft ist es, wenn das vorgebbare Profil der ersten Komponente als eine Negativform des Profils der zweiten Komponente ausgeführt ist. Auf diese Weise wird eine Art Mama-Papa-Anordnung verwirklicht, und die Abstände zwischen benachbarten Erhebungen werden sehr klein gehalten, wodurch eine geringere Energie zur Erzeugung eines Plasmas erforderlich ist. Zusätzlich können bei entsprechender Gestaltung des Profils Montagefehler beim Zusammensetzen der Vorrichtung zum Reinigen eines Abgases verhindert werden.

Gemäß noch einer weiteren Ausführungsform ist der Kern der ersten und/oder der zweiten Komponente aus Blechlagen gebildet, die zumindest teilweise so strukturiert sind, daß der Kern für ein Abgas durchströmbare Kanäle aufweist. Ein Kern mit Blechlagen verbessert aufgrund der guten Wärmeleitfähigkeit das Anspringverhalten der Vorrichtung nach dem Start einer Verbrennungsmaschine.

Besonders vorteilhaft ist es, wenn der Kern beabstandete Blechlagen mit einer axialen Länge aufweist, welche die Erhebungen und Senken der Stirnfläche bilden. Zur Herstellung des Kerns werden zumeist mehrere Blechlagen gestapelt und anschließend gewunden oder geschlungen. Werden dabei Blechlagen mit unterschiedlicher axialer Länge verwendet, wobei diese an einer Stirnfläche bündig abschließen, so stehen die Blechlagen mit der größeren axialen Länge nach dem Wickelvorgang auf der gegenüberliegenden Stirnseite hervor. Die hervorstehenden Enden der Blechlagen bilden die Erhebungen, während die Zwischenräume die Senken bilden.

Gemäß einer weiteren Ausführungsform sind die Erhebungen der ersten Komponente aus zumindest teilweise strukturierten Blechlagen gebildet und mit dem positiven Pol einer Spannungsquelle verbunden. Die Verbindung der strukturierten Blechlagen mit dem positiven Pol einer Spannungsquelle hat den Vorteil, daß die Ausbildung des elektrischen Feldes bzw. der Entladungen durch die Struktur selbst beeinflußt werden kann. Gegenüber einer glatten und ebenen negativen Elektrode stellt die Struktur Abstandsminderer dar, wobei die Feldstärke des elektrischen Feldes an Stellen mit geringem Abstand höher ist als in anderen Bereichen.

Besonders vorteilhaft ist es in diesem Zusammenhang, wenn die Erhebungen der zweiten Komponente aus glatten Blechlagen gebildet sind, wobei diese zumindest im Durchdringungsabschnitt mit einer elektrisch isolierenden Beschichtung ausgeführt und an einem negativen Pol geerdet sind. Die glatten und isolierten Blechlagen der zweiten Komponente werden in die Senken zwischen die teilweise strukturierten Blechlagen der ersten Komponente angeordnet. Die elektrische Isolierung stellt ein Dielektrikum dar. Die Schichtdicke ist so gewählt, daß die Beschichtung einerseits die dielektrische Wirkung aufweist, andererseits aber auch den thermischen und dynamischen Anforderungen in einem Abgassystem genügt.

Gemäß einer weiteren Ausgestaltung der Vorrichtung weist der Kern der Komponenten zumindest teilweise eine katalytisch aktive Oberfläche auf. Die Kombination eines Plasmareaktors mit einem Katalysator reduziert die Konzentration von Stickoxiden im Abgas erheblich. Weisen beide Komponenten eine katalytisch aktive Oberfläche außerhalb des Durchdringungsabschnittes auf, ist eine besonders kompakte Vorrichtung eines Plasmareaktors und eines Oxidationskatalysators gebildet.

Besonders vorteilhaft ist es, die erste und/oder die zweite Komponente zumindest teilweise von einem Gehäuse zu umgeben. Insbesondere bei der Anordnung der erfindungsgemäßen Vorrichtung in einer mobilen Abgasanlage, wie beispielsweise an einem PKW, verhindert das Gehäuse die Verunreinigung der Vorrichtung durch äußere Witterungseinflüsse.

Gemäß noch einer weiteren Ausführungsform sind die Komponenten gegenüber dem Gehäuse elektrisch isoliert, insbesondere in dem zwischen dem Gehäuse und den Komponenten eine Isoliermatte angeordnet ist. Die elektrische Isolation der Komponenten verhindert einen Stromfluß über das Gehäuse, wodurch die Potentialdifferenz zwischen den Komponenten aufrechterhalten wird.

Besonders vorteilhaft ist es, wenn die Stromversorgung der Komponente durch das Gehäuse hindurch elektrisch isoliert ist. Auch dies dient der Verhinderung ungewünschter Stromflüsse und dem Aufrechterhalten der Potentialdifferenz zwischen den Komponenten.

Gemäß noch einer weiteren Ausführungsform sind die Komponenten mit mindestens einer Haltevorrichtung in dem Gehäuse und/oder zueinander fixiert. Die Haltevorrichtung legt somit einerseits die axiale und radiale Ausrichtung der Komponenten im Gehäuse fest. Andererseits bietet die Haltevorrichtung die Möglichkeit, die Größe des Durchdringungsabschnittes zu variieren. Werden die Komponenten weiter voneinander beabstandet, so erstrecken sich die Erhebungen der einen Komponente nicht so tief in die Senken der anderen Komponente, wodurch gegebenenfalls auch nur ein enger begrenztes Plasma erzeugt werden kann.

Besonders vorteilhaft ist es dabei, daß sich die mindestens eine Haltevorrichtung durch das Gehäuse hindurch erstreckt. Auf diese Weise wird eine stabile Verbindung von Gehäuse und der Vorrichtung mit den zwei Komponenten ermöglicht.

Gemäß einer weiteren Ausfühnmgsform ist jeweils eine Haltevorrichtung an der ersten und zweiten Komponente befestigt, und die Haltevorrichtungen sind miteinander verbunden. Die Verbindung ist dabei insbesondere so ausgeführt, daß eine Einstellung des gewünschten axialen Abstandes der beiden Komponenten zueinander möglich ist.

Gemäß noch einer weiteren Ausführungsform ist die mindestens eine Haltevorrichtung aus einem elektrisch isolierenden Material, insbesondere Keramik, oder weist eine elektrisch isolierende Außenfläche auf. Dies stellt sicher, daß die im Betrieb angelegte Spannung nicht in andere Bereiche des Abgassystems abgeleitet wird.

Gemäß einem weiteren erfinderischen Gedanken wird ein Verfahren zum Betrieb der oben beschriebenen Vorrichtung zum Reinigen eines Abgases einer Verbrennungsmaschine vorgeschlagen, wobei eine erste Komponente von einer zweiten Komponente elektrisch isoliert angeordnet ist und die Komponenten zueinander eine Potentialdifferenz aufweisen. Das Verfahren zeichnet sich dadurch aus, daß die Potentialdifferenz der Komponenten in vorgebbaren zeitlichen Intervallen angelegt wird, wodurch ein Plasma im Durchdringungsabschnitt hervorgerufen wird. Durch die zeitliche Begrenzung der Plasmagenerierung werden lokale Überhitzungen des Reaktors bzw. des Abgases verhindert.

Um dennoch ein möglichst gleichbleibendes Plasma im Durchdringungsabschnitt zu gewährleisten, ist es vorteilhaft, die Potentialdifferenz mit einer Wiederholrate von 50 bis 2000 Hz zu erzeugen.

Gemäß einer weiteren Ausgestaltung des Verfahrens wird die Wiederholrate und/oder der Betrag der Potentialdifferenz in Abhängigkeit von der Abgastemperatur geregelt. Eine erhöhte Wiederholrate sowie eine Erhöhung der angelegten Spannung führt zu einer Erwärmung des Abgases, was insbesondere in der Kaltstartphase eines Motors erwünscht ist, wenn dem Plasmareaktor eine katalytisch aktive Komponente zur Umsetzung von Schadstoffen nachgeschaltet ist.

Besonders vorteilhaft ist es dabei, wenn die Wiederholrate und/oder der Betrag der Potentialdifferenz nach Erreichen einer vorgebbaren Abgastemperatur reduziert werden. Liefert die Verbrennungsmaschine bereits Abgas mit einer Temperatur, welche beispielsweise für eine katalytische Umsetzung geeignet ist, wird die Wiederholrate und/oder der Betrag der Potentialdifferenz reduziert. Die vorgebbare Abgastemperatur wird in Abhängigkeit der Umsetzungscharakteristika des katalytischen Konverters festgelegt.

Gemäß nach einer weiteren Ausgestaltung des Verfahrens ist die Wiederholrate und/oder der Betrag der Potentialdifferenz in Abhängigkeit des Betriebszustandes der Verbrennungsmaschine geregelt Die Konzentration von Schadstoffen im Abgas ist unter anderem von dem Betriebszustand des Motors abhängig. Befindet sich beispielsweise ein PKW in einer Beschleunigungsphase, wird in einem bestimmten Zeitabschnitt mehr Kraftstoff verbrannt, was ein Anstieg der Schadstoffmenge pro Zeitabschnitt im Abgassystem zur Folge hat. Demzufolge kann beispielsweise bei einer hohen Drehzahl die Wiederholrate und/oder der Betrag der Potentialdifferenz erhöht werden.

Weitere Einzelheiten der erfindungsgemäßen Vorrichtung zum Reinigen eines Abgases werden anhand der in der Zeichnung dargestellten besonders bevorzugten Ausführungsbeispiele erläutert.

Es zeigen:
- Fig. 1:: Eine schematische Darstellung eines Abgassystems mit einer Ausführungsform der erfindungsgemäßen Vorrichtung;
- Fig.2:: eine schematische und perspektivische Darstellung einer Ausführungsform der Vorrichtung;
- Fig.3:: eine schematische Darstellung eines Längsschnittes durch eine Ausführungsform einer Komponente;
- Fig. 4:: eine Ausführungsform eines strukturierten Bleches;
- Fig. 5:: eine weitere Ausführungform eines strukturierten Bleches;
- Fig. 6:: noch eine weitere Ausführungsform eines strukturierten Bleches;
- Fig. 7:: eine Ausführungsform eines glatten Bleches;
- Fig. 8:: eine stirnseitige Ansicht einer Ausführungsform und eine weitere stirnseitige Ansicht einer Komponente der erfindungsgemäßen Vorrichtung;
- Fig. 9:: eine stirnseitige Ansicht einer weiteren Ausführungsform der erfindungsgemäßen Vorrichtung.

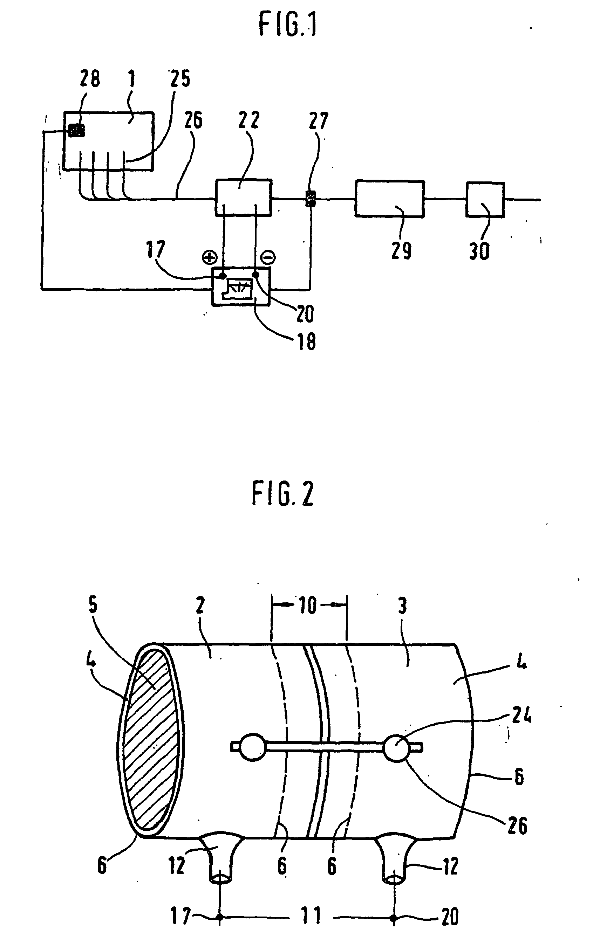

Fig. 1 zeigt eine schematische Darstellung eines Abgassystems, wie es beispielsweise im Automobilbau anzutreffen ist. In einer Verbrennungsmaschine 1 werden Abgase produziert, welche durch einen Krümmer 25 und eine nachfolgende Abgasleitung 26 in die Umgebung abgeleitet werden. In die dargestellte Abgasleitung 26 sind Komponenten zur Umsetzung der im Abgas befindlichen Schadstoffe integriert. Dem Gehäuse 22 der erfindungsgemäßen Vorrichtung ist weiter stromabwärts ein Katalysator 29 und ein Schalldämpfer 30 nachgeschaltet. Über das Gehäuse 22 ist die erfindungsgemäße Vorrichtung mit einer Spannungsquelle 18 verbunden, wobei eine Komponente 2 der erfindungsgemäßen Vorrichtung mit dem positiven Pol 17 und eine weitere Komponente 3 mit dem negativen Pol 20 verbunden ist. Die Spannungsquelle 18 erhält Daten und/oder Meßwerte von einem Sensor 27 bzw. einer Motorkontrolleinheit 28 und paßt die Wiederholrate und die Höhe der angelegten Spannung an die empfangenen Daten und/oder Meßwerte an.

Fig. 2 zeigt eine perspektivische Darstellung einer Ausführungsform der erfindungsgemäßen Vorrichtung zum Reinigen eines Abgases. Die Vorrichtung ist mit einer ersten 2 und einer zweiten Komponente 3 ausgeführt, wobei diese jeweils einen Mantel 4 und einen für ein Abgas durchströmbaren Kern 5 aufweisen. Beide Komponenten 2 und 3 werden jeweils durch zwei Stirnflächen 6 begrenzt. Auf dem Mantel 4 der Komponenten 2 und 3 ist jeweils ein Anschluß 12 angeordnet, der mit der Spannungsquelle 18 verbunden ist. Auf diese Weise ist eine Potentialdifferenz 11 zwischen der ersten Komponente 2 und der zweiten Komponente 3 angelegt. Die Lage der ersten Komponente 2 und der zweiten Komponente 3 zueinander ist durch eine Haltevorrichtung 24 fixiert. Eine derartige Ausführung der Haltevorrichtung erlaubt, den Abstand zwischen der ersten 2 und der zweiten Komponente 3 zu variieren. Auf diese Weise wird der Durchdringungsabschnitt 10 gebildet. Die Haltevorrichtung 24 weist eine elektrisch isolierende Außenfläche 26 auf, um einen Abfall der Potentialdifferenz 11 zwischen der ersten Komponente 2 und der zweiten Komponente 3 zu verhindern.

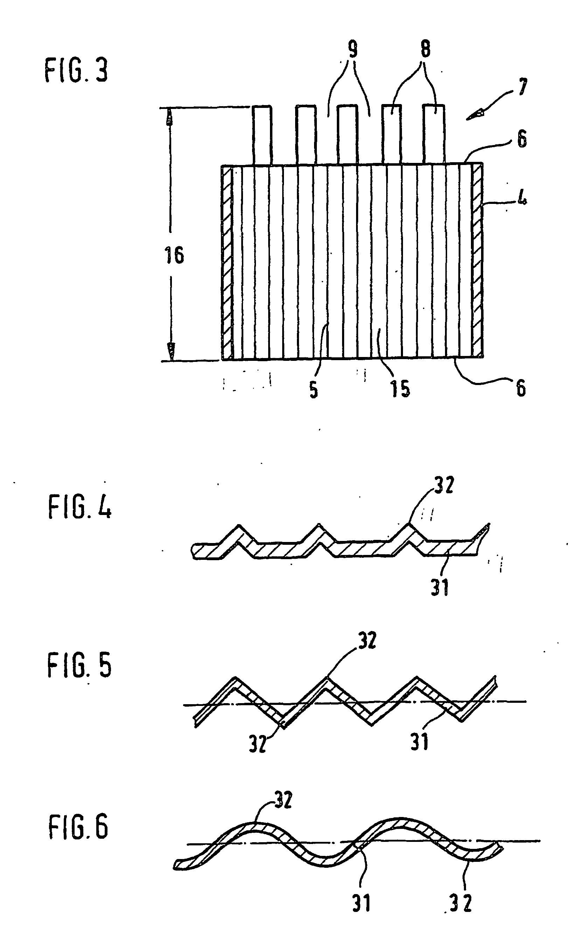

Fig. 3 zeigt schematisch einen Längsschnitt durch eine Komponente der erfindungsgemäßen Vorrichtung. Der Kern 5 ist dabei von einem Mantel 4 umgeben und weist mehrere für ein Abgas durchströmbare Kanäle 15 auf. Während eine Stirnseite 6 der Komponente eben ist, weist die gegenüberliegende Stirnfläche ein Profil 7 auf. Dieses Profil 7 weist mehrere Erhebungen 8 und Senken 9 auf. Ein ähnliches Profil 7 kann beispielsweise dadurch erzeugt werden, daß der Kern 5 mit Blechen 31 ausgeführt ist, die eine unterschiedliche axiale Länge 16 haben.

Die Fig. 4 bis 6 zeigen schematisch verschiedene Ausfuhrimgsformen strukturierter Bleche 31 mit Abstandsminderem 32. Das in Fig. 4 dargestellte Blech 31 ist besonders geeignet für die einseitige Ausbildung eines Plasmas, da die Abstandsminderer nur in einer Richtung, vorzugsweise zur anderen Elektrode hin, ausgerichtet sind. Fig. 5 zeigt ein Blech 31, welches für eine symmetrische Plasmaausbildung auf beiden Seiten des Bleches 31 geeignet ist. Die Ausführungsform gemäß Fig. 6 hat den Vorteil, daß die Struktur im Kern 5 gegebenenfalls für eine katalytische Umsetzung des Abgases geeignet ist

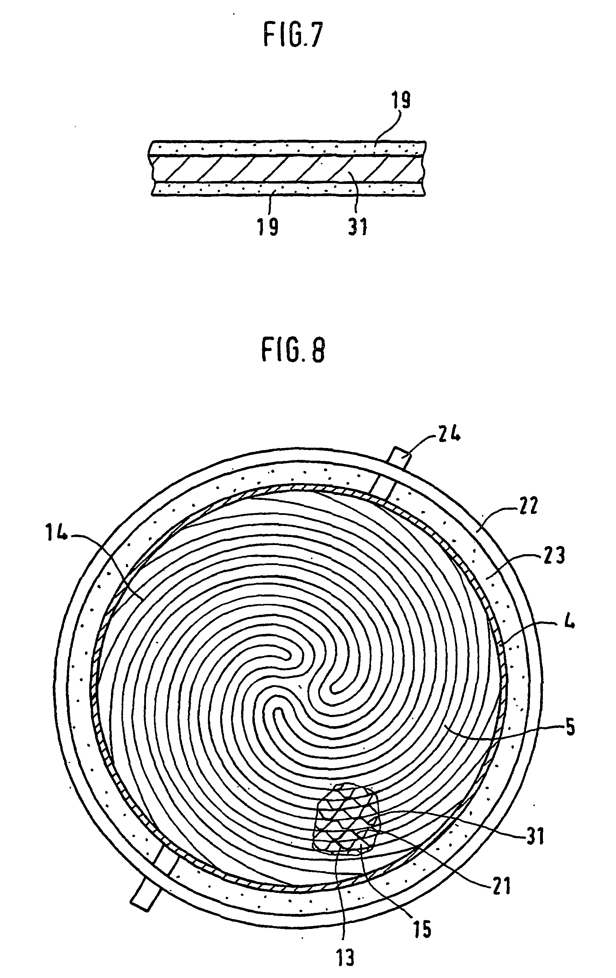

Fig. 7 zeigt eine schematische Darstellung eines Querschnitts durch ein glattes Blech, welches mit dem negativen Pol 20 einer Spannungsquelle 18 verbunden ist. Das glatte Blech 31 weist beidseitig eine elektrisch isolierende Beschichtung 19 auf. Diese Beschichtung 19 ist bevorzugt nur im Bereich der Erhebungen 8 auf dem Blech 31 aufgetragen.

Fig. 8 zeigt eine Stirnansicht einer Ausführungsform der erfindungsgemäßen Vorrichtung. In einem Gehäuse 22 ist die Vorrichtung zum Reinigen des Abgases mittels einer Haltevorrichtung 24 fixiert und durch eine Isoliermatte 24 gegenüber dem Gehäuse 22 elektrisch isoliert. Die Komponente 2 bzw. 3 umfaßt einen Mantel 4, der einen für ein Abgas durchströmbaren Kern 5 umschließt. Der Kern 5 ist aus einer Vielzahl von Blechlagen 14 aufgebaut, wobei die Blechlagen 14 aus strukturierten und glatten Blechen 31 bestehen, die eine Wabenstruktur 13 mit für ein Abgas durchlässigen Kanälen 15 bilden.

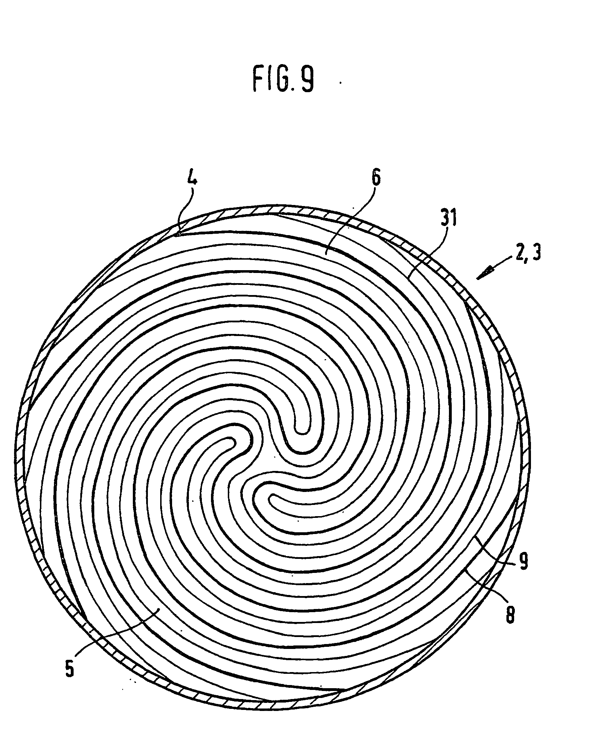

Fig. 9 zeigt eine Ausführungsform einer erfindungsgemäßen Komponente2 oder 3 mit Erhebungen 8 und Senken 9. Der Kern 5 besteht aus einer Vielzahl glatter und gewellter Bleche, wobei ein Teil (dicker gezeichnet) der glatten Bleche 31 über die Stirnfläche der Komponente hinausragt und somit Erhebungen 8 bildet. Zwischen den Erhebungen 8 sind Senken 9 aus axial kürzeren Blechen angeordnet. In diese Senken 9 werden bei der Montage der Vorrichtung die Erhebungen 8 einer anderen Komponente angeordnet. Zwischen den Erhebungen 8 der ersten Komponente und der zweiten Komponente ist ein Plasma erzeugbar.

### Bezugszeichenliste

- 1: Verbrennungsmaschine
- 2: Erste Komponente
- 5 3: Zweite Komponente
- 4: Mantel
- 5: Kern
- 6: Stirnfläche
- 7: Profil
- 8: Erhebung
- 9: Senke
- 10: Durchdringungsabschnitt
- 11: Potentialdifferenz
- 12: Anschluss
- 13: Wabenstruktur
- 14: Blechlagen
- 15: Kanal
- 16: Länge
- 17: Positiver Pol
- 18: Spannungsquelle
- 19: Beschichtung
- 20: Negativer Pol
- 21: Oberfläche
- 22: Gehäuse
- 23: Isoliermatte
- 24: Haltevorrichtung
- 25: Krümmer
- 26: Abgasleitung
- 27: Sensor
- 28: Motorkontrolleinheit
- 29: Katalysator
- 30: Schalldämpfer
- 31: Blech
- 32: Abstandsminderer

## Patentansprüche

1. Vorrichtung zum Reinigen eines Abgases einer Verbrennungsmaschine (1) mit mindestens einer ersten (2) und einer zweiten Komponente (3) mit jeweils einem Mantel (4) und einem für ein Abgas durchstömbaren Kern (5), die jeweils zwei Stirnflächen (6) aufweisen, wobei mindestens eine der Stirnflächen (6) der ersten Komponente (2) und mindestens eine Stirnseite (6) der zweiten Komponente (3) ein vorgebbares Profil (7) aus Erhebungen (8) und Senken (9) aufweist und sich die Erhebungen (8) der Stirnseite (6) der ersten Komponente (2) in die Senken (9) der Stirnseite (6) der zweiten Komponente (3) erstrecken und umgekehrt und somit einen Durchdringungsabschnitt (10) bilden, wobei die erste Komponente (2) von der zweiten Komponente (3) elektrisch isoliert angeordnet ist, die Komponenten (2, 3) untereinander eine Potentialdifferenz (11) aufweisen und in dem Durchdringungsabschnitt (10) ein Plasma erzengbar ist, und
die Komponenten (2, 3) mindestens einen Anschluss (12) zum Anlegen einer elektrischen Spannung aufweisen, **dadurch gekennzeichnet, daß** der Kern (5) der ersten (2) und/oder der zweiten Komponente (3) zumindest teilweise eine Wabenstruktur (13) aufweist.

2. Vorrichtung nach Anspruch 1, **dadurch gekennzeichnet, daß** das vorgebbare Profil (7) der ersten Komponente (2) als eine Negativform des Profils (7) der zweiten Komponente (3) ausgeführt ist

3. Vorrichtung nach einem der Ansprüche 1 oder 2, **dadurch gekennzeichnet, daß** der Kern (5) der ersten (2) und/oder der zweiten Komponente (3) aus Blechlagen (14) gebildet ist, die zumindest teilweise so strukturiert sind, dass der Kern (5) für ein Abgas durchströmbare Kanäle (15) aufweist.

4. Vorrichtung nach Anspruch 3, **dadurch gekennzeichnet, daß** der Kern (5) beabstandete Blechlagen (14) mit einer axialen Länge (16) aufweist, welche die Erhebungen (8) und Senken (9) der Stirnfläche (6) bilden.

5. Vorrichtung nach Anspruch 3 oder 4, **dadurch gekennzeichnet, daß** die Erhebungen (8) der ersten Komponente (2) aus zumindest teilweise strukturieren Blechlagen (14) gebildet und mit dem positiven Pol (17) einer Spannungsquelle (18) verbunden sind.

6. Vorrichtung nach Anspruch 5, **dadurch gekennzeichnet, daß** die Erhebungen (8) der zweite Komponente (3) aus glatten Blechlagen (14) gebildet sind, wobei diese zumindest im Durchdringungsabschnitt (10) mit einer elektrisch isolierenden Beschichtung (19) ausgeführt und an einem negativen Pol (20) geerdet sind.

7. Vorrichtung nach einem der Ansprüche 1 bis 6, **dadurch gekennzeichnet, daß** der Kern (5) der Komponenten (2, 3) zumindest teilweise eine katalytisch aktive Oberfläche (21) aufweist.

8. Vorrichtung nach einem der Ansprüche 1 bis 7, **dadurch gekennzeichnet, daß** die erste (2) und/oder die zweite Komponente (3) zumindest teilweise von einem Gehäuse (22) umgeben sind.

9. Vorrichtung nach Anspruch 8, **dadurch gekennzeichnet, daß** die Komponenten (2, 3) gegenüber dem Gehäuse (22) elektrisch isoliert sind, insbesondere indem zwischen dem Gehäuse (22) und den Komponenten (2, 3) eine Isoliermatte (23) angeordnet ist

10. Vorrichtung nach Anspruch 8 oder 9, **dadurch gekennzeichnet, daß** die Spannungsversorgung der Komponenten (2, 3) durch das Gehäuse (22) elektrisch isoliert ist.

11. Vorrichtung nach einem der Ansprüche 8 bis 10, **dadurch gekennzeichnet, daß** die Komponenten (2, 3) mit mindestens einer Haltevorrichtung (24) in dem Gehäuse (22) und/oder zueinander (3,2) fixiert sind.

12. Vorrichtung nach Anspruch 11, **dadurch gekennzeichnet, daß** sich die mindestens eine Haltevorrichtung (24) durch das Gehäuse (22) hindurch erstreckt.

13. Vorrichtung nach Anspruch 11 oder 12, **dadurch gekennzeichnet, daß** jeweils mindestens eine Haltevorrichtung (24) an der ersten (2) und zweiten Komponente (3) befestigt ist und die Haltevorrichtungen (24) miteinander verbunden sind.

14. Vorrichtung nach einem der Ansprüche 11 bis 13, **dadurch gekennzeichnet, daß** die mindestens eine Haltevorrichtung (24) aus einem elektrisch isolierenden Material, insbesondere Keramik, ist oder eine elektrisch isolierende Außenfläche (25) aufweist.

15. Verfahren zum Betrieb einer Vorrichtung zum Reinigen eines Abgases einer Verbrennungsmaschine (1) nach einem der Ansprüche 1 bis 14, wobei eine erste Komponente (2) von einer zweiten Komponente (3) elektrisch isoliert angeordnet ist, die Komponenten (2, 3) zueinander eine Potentialdifferenz (11) aufweisen, **dadurch gekennzeichnet, daß** die Potentialdifferenz (11) der Komponenten (2, 3) in vorgebbaren zeitlichen Intervallen angelegt wird, wodurch ein Plasma im Durchdringungsabschnitt (10) hervorgerufen wird.

16. Verfahren nach Anspruch 15, **dadurch gekennzeichnet, daß** die Potentialdifferenz (11) mit einer Wiederholrate von 50 bis 2000 Hz erzeugt wird.

17. Verfahren nach Anspruch 15 oder 16, **dadurch gekennzeichnet, daß** die Wiederholrate und/oder der Betrag der Potentialdifferenz (11) in Abhängigkeit von der Abgastemperartur geregelt werden.

18. Verfahren nach Anspruch 17, **dadurch gekennzeichnet, daß** Wiederholrate und/oder Betrag der Potentialdifferenz (11) nach erreichen einer vorgebbaren Abgastemperatur reduziert werden.

19. Verfahren nach einem der Ansprüche 16 bis 18, **dadurch gekennzeichnet, daß** Wiederholrate und/oder Betrag der Potentialdifferenz (11) in Abhängigkeit des Betriebszustandes der Verbrenmmgsmaschine (1) geregelt ist.

## Claims

1. A device for purifying an exhaust gas from an internal combustion engine (1) with at least a first component (2) and a second component (3), each of said components having a shell (4) and a core (5) through which the exhaust gas flows, said components each having two end faces (6) and at least one of said end faces (6) of said first component (2) and at least one of said end faces (6) of said second component (3) having a predeterminable profile (7) containing elevations (8) and depressions (9), said elevations (8) of said end face (6) of said first component (2) extending into said depressions (9) in said end face (6) of said second component (3) and vice versa, thereby forming a penetration section (10),
**characterized in that**
said first component (2) is disposed in an electrically insulated manner from said second component (3), said components (2, 3) having a potential difference (11) with respect to one another and plasma being generatable in said penetration section (10)and that said components (2, 3) have at least one connection (12) for an application of an electric voltage, whereby said core (5) of at least one of said first component (2) and said second component (3) at least in part has a honeycomb structure (13).

2. The device according to claim 1, **characterized in that** said predeterminable profile (7) of said first component (2) is configured as a negative form of said predeterminable profile (7) of said second component (3).

3. The device according to claim 1 or 2, **characterized in that** said core (5) of at least one of said first component (2) and said second component (3) is formed from sheet-metal layers (14) which are at least in part structured in such a way that said core (5) has passages (15) formed therein through which the exhaust gas can flow.

4. The device according to claim 3, **characterized in that** said sheet-metal layers (14) of said core (5) are spaced-apart and have an axial length (16), which form said elevations (8) and depressions (9) of said end face (6).

5. The device according to claim 3 or 4, **characterized in that** said elevations (8) of said first component (2) are formed from at least partially structured sheet-metal layers (14) and are connected to a positive terminal (17) of a voltage source (18).

6. The device according to claim 5, **characterized in that** said elevations (8) of said second component (3) are formed from smooth sheet-metal layers (14), said smooth sheet-metal layers at least in said penetration section (10), are configured with an electrically insulating coating (19) and are grounded at a negative pole (20).

7. The device according to any one of claims 1 to 6, **characterized in that** said core (5) of said components (2, 3), at least in part, has a catalytically active surface (21).

8. The device according to any one claims 1 to 7, **characterized in that** said first component (2) and/or said second component (3) is at least partially surrounded by a housing (22).

9. The device according to claim 8, **characterized in that** said components (2, 3) are electrically insulated from said housing (22), especially by disposing an insulating mat (23) between said housing (22) and said components (2, 3).

10. The device according to claim 8 or 9, **characterized in that** the voltage supply of said components (2, 3) is electrically insulated through said housing (22).

11. The device according to any one of claims 8 to 10, **characterized in that** said components (2, 3) are fixed by at least one holding device (24) in said housing (22) and/or with respect to one another (3, 2).

12. The device according to claim 11, **characterized in that** said holding device (24) extends through said housing (22).

13. The device according to claim 11 or 12, **characterized in that** in each case at least one of said holding devices (24) is secured to said first component (2) and to said second component (3), and said holding devices (24) are connected to one another.

14. The device according to any one of claims 11 to 13, **characterized in that** said holding device (24) is made from an electrically insulating material, especially a ceramic, or has an electrically insulating outer surface (25).

15. A method of operating a device for purifying an exhaust gas from an internal combustion engine (1) according to any one of claims 1 to 14, whereby a first component (2) is arranged in an electrically insulated manner from a second component (3), the components (2, 3) having a potential difference (11) with respect to one another, **characterized in that** and the potential difference (11) between the components (2, 3) is applied at predeterminable time intervals resulting in a plasma being produced in the penetration section (10).

16. The method according to claim 15, **characterized in that** the potential difference (11) is produced with a repetition rate of 50 to 2000 Hz.

17. The method according to claim 15 or 16, **characterized in that** the repetition rate and/or the magnitude of the potential difference (11) are controlled in dependence on an exhaust-gas temperature.

18. The method according to claim 17, **characterized in that** the repetition rate and/or the magnitude of the potential difference (11) are reduced after a predeterminable exhaust-gas temperature has been reached.

19. The method according to any one of claims 16 to 18, **characterized in that** the repetition rate and/or the magnitude of the potential difference (11) are controlled in dependence on the operating state of the internal combustion engine (1).

## Revendications

1. Dispositif pour épurer un gaz d'échappement d'une machine à combustion interne (1) comportant au moins un premier (2) et un deuxième composant (3) avec respectivement une enveloppe (4) et une âme (5) pouvant être parcourue par un gaz d'échappement, lesquels composants ont respectivement deux faces frontales (6), dans quel cas au moins une des faces frontales (6) du premier composant (2) et au moins une face frontale (6) du deuxième composant (3) a un profil (7) pouvant être prédéterminé d'éminences (8) et de creux (9) et les éminences (8) de la face frontale (6) du premier composant (2) s'étendent dans les creux (9) de la face frontale (6) du deuxième composant (3) et vice-versa et forment ainsi une région de pénétration (10), le premier composant (2) étant agencé de manière à être isolée électriquement du deuxième composant (3), les composants (2, 3) ayant entre eux une différence de potentiel (11) et un plasma pouvant être créé dans la région de pénétration (10) et les composants (2, 3) ayant au moins une connexion (12) pour appliquer une tension électrique, **caractérisé en ce que** l'âme (5) du premier (2) et/ou du deuxième composant (3) a au moins partiellement une structure en nids d'abeilles (13).

2. Dispositif selon la revendication 1, **caractérisé en ce que** le profil (7) pouvant être prédéterminé du premier composant (2) est réalisé comme forme négative du profil (7) du deuxième composant (3).

3. Dispositif selon l'une des revendications 1 ou 2, **caractérisé en ce que** l'âme (5) du premier (2) et/ou du deuxième composant (3) est formé de couches de tôle (14) qui sont au moins partiellement structurées de telle manière que l'âme (5) présente des canaux (15) pouvant être parcourus par un gaz d'échappement.

4. Dispositif selon la revendication 3, **caractérisé en ce que** l'âme (5) a des couches de tôle (14) écartées, avec une longueur axiale (16) qui forment les éminences (8) et les creux (9) de la face frontale (6).

5. Dispositif selon la revendication 3 ou 4, **caractérisé en ce que** les éminences (8) du premier composant (2) sont formées de couches de tôle au moins partiellement structurées (14) et sont reliées au pôle positif (17) d'une source de tension (18).

6. Dispositif selon la revendication 5, **caractérisé en ce que** les éminences (8) du deuxième composant (3) sont formées de couches de tôles lisses (14), dans quel cas celles-ci sont dotées ; au moins dans la région de pénétration, d'un revêtement isolant électriquement (19) et sont mises à la masse sur un pôle négatif (20).

7. Dispositif selon l'une des revendications 1 à 6, **caractérisé en ce que** l'âme (5) des composants (2, 3) présente au moins partiellement une surface à activité catalytique (21).

8. Dispositif selon l'une des revendications 1 à 7, **caractérisé en ce que** le premier (2) et/ou le deuxième composant (3) sont/est entouré(s) au moins partiellement d'un boîtier (22).

9. Dispositif selon la revendication 8, **caractérisé en ce que** les composants (2, 3) sont isolés électriquement par rapport au boîtier (22), notamment en agençant un tapis isolant (23) entre le boîtier (22) et les composants (2, 3).

10. Dispositif selon la revendication 8 ou 9, **caractérisé en ce que** l'alimentation en courant des composants (2, 3) est isolée électriquement par le boîtier (22).

11. Dispositif selon l'une des revendications 8 à 10, **caractérisé en ce que** les composants (2, 3) sont fixés au moyen d'au moins un dispositif de retenue (24) dans le boîtier (22) et/ou sont fixés l'un par rapport à l'autre (3, 2).

12. Dispositif selon la revendication 11, **caractérisé en ce que** l'au moins un dispositif de retenue (24) s'étend à travers le boîtier (22).

13. Dispositif selon la revendication 11 ou 12, **caractérisé en ce que** respectivement au moins un dispositif de retenue (24) est fixé sur le premier (2) et le deuxième composant (3) et que les dispositifs de retenue (24) sont reliés les uns aux autres.

14. Dispositif selon l'une des revendications 11 à 13, **caractérisé en ce que** l'au moins un dispositif de retenue (24) est en un matériau isolant électriquement, notamment en céramique ou qu'il a une surface extérieure (25) qui isole électriquement.

15. Procédé pour opérer un dispositif pour l'épuration de gaz d'échappement d'une machine à combustion interne (1) selon l'une des revendications 1 à 14, dans quel cas un premier composant (2) est agencé de manière à être isolé électriquement d'un deuxième composant (3), les composants (2, 3) ont l'un par rapport à l'autre une différence de potentiel (11), **caractérisé en ce que** la différence de potentiel (11) des composants (2, 3) est appliquée en intervalles temporels pouvant être prédéterminés, par quel moyen un plasma est généré dans la région de pénétration (10).

16. Procédé selon la revendication 15, **caractérisé en ce que** la différence de potentiel (11) est créée avec une fréquence de répétition de 50 à 2000 Hz.

17. Procédé selon la revendication 15 ou 16, **caractérisé en ce que** la fréquence de répétition et/ou le montant de la différence de potentiel (11) sont réglés en fonction de la température de gaz d'échappement.

18. Procédé selon la revendication 17, **caractérisé en ce que** la fréquence de répétition et/ou le montant de la différence de potentiel (11) sont réduits après avoir atteint une température de gaz d'échappement prédéterminée.

19. Procédé selon l'une des revendications 16 à 18, **caractérisé en ce que** la fréquence de répétition et/ou le montant de la différence de potentiel (11) sont réglés en fonction de l'état d'opération de la machine à combustion interne (1).
